# EUROPEAN PATENT APPLICATION

(11) **EP 4 550 911 A1**
(43) Date of publication of application: **07.05.2025**
(21) Application number: 23849247.4
(22) Date of filing: 26.07.2023
(51) Int. Cl.: H04W 72/04

(54) **COMMUNICATION METHOD SUPPORTING WI-FI PERCEPTION, AND RELATED PRODUCT**

(30) Priority: 05.08.2022 CN 202210938189; 13.10.2022 CN 202211251748
(71) Applicant: Huawei Technologies Co., Ltd., Shenzhen, Guangdong 518129 (CN)
(72) Inventor: ZHAO, Yonghao, Shenzhen, Guangdong 518129 (CN); RUAN, Wei, Shenzhen, Guangdong 518129 (CN); ABEYWICKRAMA, Tharindu Samith, Shenzhen, Guangdong 518129 (CN); PAN, Ju Yan, Shenzhen, Guangdong 518129 (CN); WANG, Zhenzhong, Shenzhen, Guangdong 518129 (CN)
(74) Representative: Maiwald GmbH
(86) International application number: PCT/CN2023/109356
(87) International publication number: WO 2024/027539

(57) **Abstract**

This application discloses a Wi-Fi sensing-supported communication method and a related product. This application is applied to a wireless local area network system that supports a next-generation Wi-Fi protocol of IEEE802.11ax, for example, 802.11be, also referred to as Wi-Fi 7 or EHT, and an 802.11 series protocol, for example, a next-generation of 802. 11be, namely, Wi-Fi 8. The method includes: sending a request frame to a receive end, where the request frame includes a first field (which may be referred to as a feedback data type selection field) and a second field (a feedback data filtering condition setting field), the first field indicates a first type, the first type is a type of data requested by a transmit end from the receive end, and the second field indicates a condition that needs to be met by data of the first type. The receive end is enabled to feed back, based on the request frame, data that is of the first type and that meets the condition, to efficiently obtain required data from another Wi-Fi device.

## Description

This application claims priorities to Chinese Patent Application No. 202210938189.3, filed with the China National Intellectual Property Administration on August 5, 2022, and entitled "WI-FI-BASED SENSING METHOD AND RELATED PRODUCT"; and to Chinese Patent Application No. 202211251748.X, filed with the China National Intellectual Property Administration on October 13, 2022, and entitled "WI-FI SENSING-SUPPORTED COMMUNICATION METHOD AND RELATED PRODUCT", which are incorporated herein by reference in their entireties.

### TECHNICAL FIELD

This application relates to the field of wireless communication technologies, and in particular, to a Wi-Fi sensing-supported communication method and a related product in the sensing field.

### BACKGROUND

As the most widely used wireless network transmission technology, Wi-Fi has evolved through a plurality of generations, from IEEE 802.11a to b, g, n, and ax. In recent years, in addition to a communication function, application of Wi-Fi technologies in the wireless sensing field is discussed in a plurality of academic researches. For example, the application is intrusion detection, action recognition, and gesture recognition. The related standard IEEE 802.11 bf is under discussion.

The Wi-Fi wireless sensing technology mainly analyzes a Wi-Fi signal, and speculates an environment and/or a human body in a propagation process of the Wi-Fi signal. A research shows that, information such as a direct path distance, a human body action, and breathing and a heartbeat may be obtained by processing channel state information (channel state information, CSI) data. A research shows that information such as a range, a velocity, and a velocity/Doppler of a target to be measured may be obtained by processing Wi-Fi radar data. A Wi-Fi radar, similar to a radar, is an apparatus constructed based on a Wi-Fi device. A transmitter of the apparatus transmits an electromagnetic wave signal. A receiver of the apparatus receives an electromagnetic wave signal reflected by the target, and processes the electromagnetic wave signal together with the transmitted signal, for example, mixes a transmitted signal and a received signal. Processed sampled data is the Wi-Fi radar data.

A time division duplex (time division duplex, TDD) communication mechanism means that a device can only serve as a transmit end (or referred to as a transmitter) or a receive end at a time, in other words, cannot serve as both the transmit end and the receive end simultaneously. Because a Wi-Fi device uses the TDD communication mechanism, a Wi-Fi sensing system based on CSI data and a Wi-Fi sensing system based on Wi-Fi radar data both have an observation discontinuity problem, in other words, no device at any end can ensure that continuous CSI data or Wi-Fi radar data can be obtained. The CSI data can be solved in real time only when the Wi-Fi device serves as the receive end, and cannot be solved in real time when the Wi-Fi device serves as the transmit end. Similarly, the Wi-Fi radar data can be obtained in real time only when the Wi-Fi device serves as the transmit end (in this case, a receiver of the device receives a signal that is transmitted by the transmit end of the device and reflected back), and cannot be obtained in real time when the Wi-Fi device serves as the receive end (in this case, the receiver of the device needs to receive a signal transmitted by a peer end). Therefore, a solution for efficiently obtaining data, for example, CSI data and Wi-Fi radar data from another Wi-Fi device needs to be studied.

### SUMMARY

Embodiments of this application disclose a Wi-Fi sensing-supported communication method and a related product, to efficiently obtain data, for example, channel state information data and Wi-Fi radar data from another Wi-Fi device.

According to a first aspect, an embodiment of this application provides a Wi-Fi sensing-supported communication method. The method is performed by a transmit end or a module used in the transmit end, and the method includes: generating a request frame; sending the request frame to a receive end, where the request frame includes a first field and a second field, the first field indicates a first type, the first type is a type of data requested by the transmit end from the receive end, the second field includes a condition that needs to be meet by data of the first type, and the data of the first type is any one of the following: channel state information data, Wi-Fi radar data, and state information data that is of a target and that is obtained by processing a Wi-Fi signal, the channel state information data, or the Wi-Fi radar data.

In this embodiment of this application, the first field indicates the first type, and the second field indicates the condition that needs to be met by the data of the first type, so that the receive end feeds back, based on the request frame, the data that is of the first type and that meets the condition. Therefore, required data can be efficiently obtained from another Wi-Fi device. In addition, the second field indicates the condition that needs to be met by the data of the first type, so that the data fed back by the receive end is all data required by the transmit end, thereby reducing communication resources occupied by feeding back data.

In a possible implementation, the second field includes time information, and the time information indicates the receive end to feed back data obtained in a first time period.

In this implementation, the second field includes the time information, so that the receive end feeds back the data obtained in the first time period. The transmit end may enable, based on the time information included in the second field, the receive end to feed back data required by the transmit end in any time period.

In a possible implementation, the second field includes a range threshold and/or a velocity threshold, the range threshold indicates the receive end to feed back data that meets the range threshold, and the velocity threshold indicates the receive end to feed back data that meets the velocity threshold.

In this implementation, the second field includes the range threshold. By indicating the receive end to feed back the data that meets the range threshold, the data that meets the range threshold can be obtained, and a data amount fed back by the receive end can be reduced. The second field includes the velocity threshold. By indicating the receive end to feed back the data that meets the velocity threshold, the data that meets the velocity threshold can be obtained, and the data amount fed back by the receive end can be reduced.

In a possible implementation, the request frame further includes a third field, and the third field includes a time stamp or a number of the request frame.

In this implementation, the third field includes the time stamp or the number of the request frame, so that the receive end distinguishes between different request frames based on the time stamp or the number. In addition, the time stamp of the request frame may be further used for related calculation or processing.

In a possible implementation, the method further includes: receiving a response frame sent by the receive end for the request frame, where the response frame includes a fourth field, and the fourth field includes first data that meets the condition and that is of the first type.

In this implementation, the transmit end may obtain, based on the response frame, the first data that is of the first type and that meets the condition of the response frame.

In a possible implementation, the response frame further includes a fifth field and/or a sixth field, the fifth field includes a decoding result obtained by decoding the first field, and the sixth field includes a decoding result obtained by decoding the second field.

In this implementation, the response frame further includes the fifth field, to check, based on the fifth field, whether a type of data sent by the receive end is the first type, in other words, check whether the first field is correctly parsed by the receive end. The response frame further includes the sixth field, to check, based on the sixth field, whether the type of the data sent by the receive end meets the condition, in other words, check whether the receive end correctly parses the second field. In this way, this can avoid a case in which the receive end cannot feed back data required by the transmit end to the transmit end because the receive end fails to parse out the correct first field and/or the correct second field.

In a possible implementation, the response frame includes the fifth field and the sixth field, and the third field includes the time stamp (or the number) of the request frame; and the method further includes: decoding the response frame; and checking the fifth field and the sixth field that are obtained through decoding. Optionally, when both the fifth field and the sixth field pass a check, data in the fourth field is used for sensing. Optionally, when the fifth field or the sixth field fails to pass the check, the response frame is discarded.

In this implementation, the fifth field and the sixth field that are obtained through decoding are checked, and whether data fed back by the receive end is data required by the transmit end may be checked. Data fed back by one or more receive ends may be sorted through a time stamp (or a number) of the response frame, and sensing data fusion is performed based on sorting.

In a possible implementation, the response frame includes the fifth field. The method further includes: decoding the response frame; and checking the fifth field obtained through decoding. Optionally, when the fifth field passes the check, the data in the fourth field is used for sensing. Optionally, when the fifth field fails to pass the check, the response frame is discarded. Optionally, the response frame further includes a seventh field, and the seventh field includes a time stamp or a number of the response frame. The method further includes: checking the time stamp or the number that is of the response frame and that is obtained by decoding the response frame.

In this implementation, the fifth field obtained through decoding is checked, and whether the data fed back by the receive end is the data required by the transmit end may be checked.

In a possible implementation, the response frame includes the sixth field. The method further includes: decoding the response frame; and checking the sixth field obtained through decoding. Optionally, when the sixth field passes the check, the data in the fourth field is used for sensing. Optionally, when the sixth field fails to pass the check, the response frame is discarded. Optionally, the response frame further includes the seventh field, and the seventh field includes the time stamp or the number of the response frame. The method further includes: checking the time stamp or the number that is of the response frame and that is obtained by decoding the response frame.

In this implementation, the sixth field obtained through decoding is checked, and whether the data fed back by the receive end is the data required by the transmit end may be checked.

In a possible implementation, the response frame further includes a seventh field, and the seventh field includes a time stamp or a number of the response frame.

In this implementation, the seventh field includes the time stamp or the number of the response frame, so that the transmit end distinguishes between different response frames based on the time stamp or the number. In addition, the time stamp of the response frame may be further used for related calculation or processing.

In a possible implementation, the condition includes feeding back data in the first time period, and the first data is data of the first type obtained by the receive end in the first time period; and after the receiving a response frame sent by the receive end for the request frame, the method further includes: obtaining difference information by comparing the first data with second data, where the difference information represents a difference between the first data and the second data, the second data includes data of a second type obtained by the transmit end in the first time period, and the data of the first type is the channel state information data and the data of the second type is the Wi-Fi radar data, or the data of the second type is the channel state information data and the data of the first type is the Wi-Fi radar data; obtaining third data of the first type in a second time period, where the second time period is a time period after the first time period; and obtaining sensing information based on the second data, the third data, and the difference information, where the sensing information represents a state change of the target from the first time period to the second time period.

In this implementation, the sensing information is obtained based on the second data, the third data, and the difference information, to obtain the sensing information that accurately represents the state change of the target from the first time period to the second time period.

In a possible implementation, the obtaining sensing information based on the second data, the third data, and the difference information includes: calibrating the third data based on the second data, the third data, and the difference information, to obtain sensing data coherent from the first time period to the second time period.

In this implementation, the sensing data coherent from the first time period to the second time period can be obtained, and a problem of observation discontinuity can be resolved.

According to a second aspect, an embodiment of this application provides another Wi-Fi sensing-supported communication method. The method is performed by a receive end or a module used in the receive end, and the method includes: receiving a request frame from a transmit end, where the request frame includes a first field and a second field, the first field indicates a first type, the first type is a type of data requested by the transmit end from the receive end, the second field includes a condition that needs to be met by data of the first type, and the data of the first type is any one of the following: channel state information data, Wi-Fi radar data; and state information data that is of a target and that is obtained by processing a Wi-Fi signal, the channel state information data, or the Wi-Fi radar data; and sending a response frame to the transmit end, where the response frame includes a fourth field, and the fourth field includes first data that is of the first type and that meets the condition.

In this embodiment of this application, the first field indicates the first type, and the second field indicates the condition that needs to be met by the data of the first type. Based on the request frame, the receive end can learn that the data of the first type needs to be fed back to the transmit end, and learn of the condition that the data of the first type meets. The receive end can accurately feed back, to the transmit end based on the request frame, data that the transmit end requires the receive end to feed back, and reduce communication resources occupied by feeding back data.

In a possible implementation, the response frame further includes a fifth field and/or a sixth field, the fifth field includes a decoding result obtained by decoding the first field, and the sixth field includes a decoding result obtained by decoding the second field.

In this implementation, the response frame further includes the fifth field, so that the transmit end checks, based on the fifth field, whether a type of data sent by the receive end is the first type, in other words, checks whether the first field is correctly parsed by the receive end. The response frame further includes the sixth field, so that the transmit end checks, based on the sixth field, whether the type of the data sent by the receive end meets the condition, in other words, checks whether the receive end correctly parses the second field. In this way, this can avoid a case in which the receive end cannot feed back data required by the transmit end to the transmit end because the receive end fails to parse out the correct first field and/or the correct second field.

In a possible implementation, the response frame further includes a seventh field, and the seventh field includes a time stamp or a number of the response frame.

In this implementation, the seventh field includes the time stamp or the number of the response frame, so that the transmit end distinguishes between different response frames based on the time stamp or the number. In addition, the time stamp of the response frame may be further used for related calculation or processing.

In a possible implementation, the second field includes time information, and the time information indicates the receive end to feed back data obtained in a first time period.

In this implementation, the second field includes the time information, and the receive end can feed back, to the transmit end based on the time information, the data obtained in the first time period. The transmit end may enable, based on the time information included in the second field, the receive end to feed back data required by the transmit end in any time period.

In a possible implementation, the second field includes a range threshold and/or a velocity threshold, the range threshold indicates the receive end to feed back data that meets the range threshold, and the velocity threshold indicates the receive end to feed back data that meets the velocity threshold.

In this implementation, the second field includes the range threshold. By indicating the receive end to feed back the data that meets the range threshold, the data that meets the range threshold can be obtained, and a data amount fed back by the receive end can be reduced. In this way, occupied communication resources are reduced. The second field includes the velocity threshold. By indicating the receive end to feed back the data that meets the velocity threshold, the data that meets the velocity threshold can be obtained, and the data amount fed back by the receive end can be reduced.

In a possible implementation, the request frame further includes a third field, and the third field includes a time stamp or a number of the request frame.

In this implementation, the third field includes the time stamp or the number of the request frame, and the receive end distinguishes between different request frames based on the time stamp or the number. In addition, the receive end may use the time stamp of the request frame for related calculation or processing.

In a possible implementation, the request frame further includes the third field. After the receiving a request frame from a transmit end, the method further includes: decoding the request frame; checking a time stamp or a number that is of the request frame and that is obtained through decoding; in a case in which the time stamp or the number of the request frame passes the check, obtaining, based on the first field and the second field, the first data that is of the first type and that meets the condition; and generating the response frame.

In this implementation, in a case in which the time stamp or the number of the request frame passes the check, the first data that is of the first type and that meets the condition is obtained based on the first field and the second field, to accurately feed back, to the transmit end, data required by the transmit end, and reduce occupied communication resources.

In a possible implementation, the generating the response frame includes: generating the fifth field based on the first field, and/or generating the sixth field based on the second field; and generating the fourth field based on the first data.

In this implementation, the fifth field is generated based on the first field, so that the transmit end checks, based on the fifth field, whether a type of data sent by the receive end is the first type. The sixth field is generated based on the second field, so that the transmit end checks, based on the sixth field, whether a type of data sent by the receive end meets the condition. The fourth field is generated based on the first data, to feed back data required by the transmit end to the transmit end. Optionally, a seventh field is generated, the response frame further includes the seventh field, and the seventh field includes a time stamp or a number of the response frame.

In a possible implementation, the method further includes: when the time stamp or the number of the request frame fails to pass the check, skipping responding to the request frame, in other words, skipping performing feedback to the request frame. The skipping responding to the request frame may be discarding the request frame, or may be ignoring the request frame. In other words, it is considered that the request frame is an invalid frame.

In this implementation, when the third field fails to pass a check, the request frame is not responded to, so that data sending can be reduced, to reduce communication resource overheads.

According to a third aspect, an embodiment of this application provides a communication apparatus. The communication apparatus has a function that implements actions in the method embodiment in the first aspect. The communication apparatus may be a communication device, or may be a component (for example, a processor, a chip, or a chip system) of the communication device, or may be a logical module or software that can implement all or some functions of the communication device. A function of the communication apparatus (transmit end) may be implemented by hardware, or may be implemented by using the hardware to execute corresponding software. The hardware or the software includes one or more modules or units corresponding to the foregoing function. In a possible implementation, the communication apparatus includes a transceiver module and a processing module. The processing module is configured to generate a request frame. The transceiver module is configured to send the request frame to a receive end. The request frame includes a first field and a second field. The first field indicates a first type, and the first type is a type of data requested by the transmit end from the receive end. The second field includes a condition that needs to be met by data of the first type, and the data of the first type is any one of the following: channel state information data; Wi-Fi radar data; and state information data that is of a target and that is obtained by processing a Wi-Fi signal, the channel state information data, or the Wi-Fi radar data.

In a possible implementation, the transceiver module is further configured to receive a response frame that is sent by the receive end for the request frame. The response frame includes a fourth field, and the fourth field includes first data that meets the condition and that is of the first type.

In a possible implementation, the response frame includes a fifth field and a sixth field, and the third field includes a time stamp (or a number) of the request frame. The processing module is further configured to decode the response frame; and check the fifth field and the sixth field that are obtained through decoding. Optionally, the processing module is further configured to perform sensing based on data in the fourth field when both the fifth field and the sixth field pass the check. Optionally, the processing module is further configured to discard the response frame when the fifth field or the sixth field fails to pass the check.

In a possible implementation, the response frame includes the fifth field. The processing module is further configured to decode the response frame, and check the fifth field obtained through decoding. Optionally, the processing module is further configured to perform sensing based on data in the fourth field when the fifth field passes the check. Optionally, the processing module is further configured to discard the response frame when the fifth field fails to pass the check. Optionally, the response frame further includes a seventh field, and the seventh field includes a time stamp or a number of the response frame. The processing module is further configured to check the time stamp or the number that is of the response frame and that is obtained by decoding the response frame.

In a possible implementation, the response frame includes the sixth field. The processing module is further configured to decode the response frame, and check the sixth field obtained through decoding. Optionally, the processing module is further configured to perform sensing based on data in the fourth field when the sixth field passes the check. Optionally, the processing module is further configured to discard the response frame when the sixth field fails to pass the check. Optionally, the response frame further includes a seventh field, and the seventh field includes a time stamp or a number of the response frame. The processing module is further configured to check the time stamp or the number that is of the response frame and that is obtained by decoding the response frame.

In a possible implementation, the condition includes feeding back data in a first time period, and the first data is data of the first type obtained by the receive end in the first time period. The processing module is further configured to obtain difference information by comparing the first data with second data. The difference information represents a difference between the first data and the second data. The second data includes data of the second type obtained by the transmit end in the first time period. The data of the first type is CSI data, and the data of the second type is the Wi-Fi radar data, or the data of the second type is CSI data and the data of the first type is the Wi-Fi radar data. Third data of the first type in a second time period is obtained, and the second time period is a time period after the first time period. Sensing information is obtained based on the second data, the third data, and the difference information. The sensing information represents a state change of the target from the first time period to the second time period.

In a possible implementation, the processing module is specifically configured to calibrate the third data based on the second data, the third data, and the difference information, and obtain sensing data coherent from a first time period to a second time period.

For possible implementations of the communication apparatus in the third aspect, refer to the possible implementations of the first aspect.

For technical effects brought by various possible implementations of the third aspect, refer to descriptions of technical effects of the first aspect or various possible implementations of the first aspect.

According to a fourth aspect, an embodiment of this application provides another communication apparatus. The communication apparatus has a function that implements actions in the method embodiment in the second aspect. The communication apparatus may be a communication device, or may be a component (for example, a processor, a chip, or a chip system) of the communication device, or may be a logical module or software that can implement all or some functions of the communication device. A function of the communication apparatus (receive end) may be implemented by hardware, or may be implemented by using the hardware to execute corresponding software. The hardware or the software includes one or more modules or units corresponding to the foregoing function. In a possible implementation, the communication apparatus includes a transceiver module and a processing module. The transceiver module is configured to receive a request frame from a transmit end. The request frame includes a first field and a second field. The first field indicates a first type, and the first type is a type of data requested by the transmit end from the receive end. The second field includes a condition that needs to be met by data of the first type, and the data of the first type is any one of the following: channel state information data; Wi-Fi radar data; and state information data that is of a target and that is obtained by processing a Wi-Fi signal, the channel state information data, or the Wi-Fi radar data. The processing module is configured to generate a response frame. The response frame includes a fourth field, and the fourth field includes first data that is of the first type and that meets the condition. The transceiver module is further configured to send the response frame to the transmit end.

In a possible implementation, the request frame further includes a third field. The processing module is further configured to: decode the request frame; check a time stamp or a number that is of the request frame and that is obtained through decoding; in a case in which the time stamp or the number of the request frame passes the check, obtain, based on the first field and the second field, first data that is of the first type and that meets the condition; and generate the response frame.

In a possible implementation, the processing module is specifically configured to: generate a fifth field based on the first field, and/or generate a sixth field based on the second field; and generate the fourth field based on the first data.

In a possible implementation, the processing module is further configured to skip responding to the request frame in a case in which the time stamp or the number of the request frame fails to pass the check, in other words, skip performing feedback to the request frame.

For technical effects brought by various possible implementations of the fourth aspect, refer to descriptions of technical effects of the second aspect or various possible implementations of the second aspect.

According to a fifth aspect, an embodiment of this application provides another communication apparatus. The communication apparatus includes a processor. The processor is coupled to a memory. The memory is configured to store a program or instructions. When the program or the instructions are executed by the processor, the communication apparatus is enabled to perform the method shown in the first aspect or the second aspect.

In this embodiment of this application, in a process of performing the foregoing method, a process of sending information (or a signal) in the foregoing method may be understood as a process of outputting information based on instructions of a processor. When outputting the information, the processor outputs the information to a transceiver, so that the transceiver transmits the information. After the information is output by the processor, other processing may be further needed, and then the information arrives at the transceiver. Similarly, when the processor receives input information, the transceiver receives the information, and inputs the information into the processor. Further, after the transceiver receives the information, the information may need to undergo other processing, and then is input into the processor.

Operations such as sending and/or receiving related to the processor may be generally understood as instruction outputs based on the processor, unless otherwise specified, or if the operations do not conflict with actual functions or internal logic of the operations in related descriptions.

In an implementation process, the processor may be a processor specially configured to perform these methods, or may be a processor that executes computer instructions in a memory to perform these methods, for example, a general-purpose processor. For example, the processor may be further configured to execute a program stored in a memory. When the program is executed, the communication apparatus is enabled to perform the method shown in the first aspect or any possible implementation of the first aspect.

In a possible implementation, the memory is located outside the communication apparatus. In a possible implementation, the memory is located inside the communication apparatus.

In a possible implementation, the processor and the memory may be further integrated into one component, in other words, the processor and the memory may be further integrated together.

In a possible implementation, the communication apparatus further includes a transceiver. The transceiver is configured to receive a signal, send a signal, or the like.

According to a sixth aspect, this application provides another communication apparatus. The communication apparatus includes a processing circuit and an interface circuit. The interface circuit is configured to obtain data or output data. The processing circuit is configured to perform the method shown in the first aspect or the second aspect.

According to a seventh aspect, this application provides a computer-readable storage medium. The computer-readable storage medium stores a computer program. The computer program includes program instructions. When the program instructions are executed, a computer is enabled to perform the method shown in the first aspect or the second aspect.

According to an eighth aspect, this application provides a computer program product. The computer program product includes a computer program. The computer program includes program instructions. When the program instructions are executed, a computer is enabled to perform the method shown in the first aspect or the second aspect.

According to a ninth aspect, this application provides a communication system. The communication system includes the communication apparatus according to the third aspect or any possible implementation of the third aspect and the communication apparatus according to the fourth aspect or any possible implementation of the fourth aspect.

According to a tenth aspect, this application provides a chip, including a processor and a communication interface. The processor reads, through the communication interface, instructions stored in a memory, to perform the method according to the first aspect or the fourth aspect.

### BRIEF DESCRIPTION OF DRAWINGS

To describe the technical solutions in embodiments of this application or in the background more clearly, the following briefly describes the accompanying drawings for describing embodiments of this application or the background.
FIG. 1 is an example of a wireless communication system to which a technical solution provided in this application is applicable;
FIG. 2 is an interaction flowchart of a Wi-Fi sensing-supported communication method according to an embodiment of this application;
FIG. 3 is an example of a request frame according to an embodiment of this application;
FIG. 4 is an interaction flowchart of another Wi-Fi sensing-supported communication method according to an embodiment of this application;
FIG. 5 is an example of a response frame according to an embodiment of this application;
FIG. 6 is an interaction flowchart of another Wi-Fi sensing-supported communication method according to an embodiment of this application;
FIG. 7 is an interaction flowchart of another Wi-Fi sensing-supported communication method according to an embodiment of this application;
FIG. 8 is an interaction flowchart of another Wi-Fi sensing-supported communication method according to an embodiment of this application;
FIG. 9 is an interaction flowchart of another Wi-Fi sensing-supported communication method according to an embodiment of this application;
FIG. 10 is a diagram of a range-velocity two-dimensional matrix according to an embodiment of this application;
FIG. 11 is a schematic flowchart of a Wi-Fi sensing method according to an embodiment of this application;
FIG. 12 is a diagram of a structure of a communication apparatus 1200 according to an embodiment of this application; and
FIG. 13 is a diagram of a structure of another communication apparatus 1300 according to an embodiment of this application.

### DESCRIPTION OF EMBODIMENTS

In the specification, claims, and the accompanying drawings of this application, terms such as "first" and "second" are only intended to distinguish between different objects but do not describe a particular order. In addition, terms "include", "have", or any other variant thereof are intended to cover a non-exclusive inclusion. For example, a process, a method, a system, a product, or a device that includes a series of steps or units is not limited to the listed steps or units, but optionally further includes an unlisted step or unit, or optionally further includes another step or unit inherent to the process, the method, the product, or the device.

An "embodiment" mentioned in this specification means that a particular feature, structure, or characteristic described with reference to this embodiment may be included in at least one embodiment of this application. The phrase shown in various locations in the specification may not necessarily refer to a same embodiment, and is not an independent or optional embodiment exclusive from another embodiment. It is explicitly and implicitly understood by a person skilled in the art that embodiments described in the specification may be combined with another embodiment.

Terms used in the following embodiments of this application are merely intended to describe specific embodiments, but are not intended to limit this application. As used in the specification of this application and the appended claims, the singular expression "a", "an", "the", "the foregoing", "such a", or "this" is intended to also include a plural expression unless otherwise clearly indicated in the context. It should also be understood that, the term "and/or" used in this application indicates and includes any or all possible combinations of one or more associated listed items. For example, "A and/or B" may represent three cases: Only A exists, only B exists, and both A and B exist, where A and B may be singular or plural. The term "a plurality of" used in this application means two or more.

The following first describes terms in embodiments of this application.

### Wi-Fi sensing, Wi-Fi sensing data, and Wi-Fi sensing data

Definition of Wi-Fi sensing: Based on a device that supports Wi-Fi communication, that is, a Wi-Fi apparatus or a Wi-Fi device, a state of a measured target (for example, an object or a person) in surrounding space, for example, information such as a range, a velocity (Doppler), an angle, a quantity, a body shape, an action, and a physiological signal, is detected by transmitting/receiving/processing a Wi-Fi signal.

Definition of Wi-Fi sensing data: State information data of a measured object obtained by processing a Wi-Fi signal, CSI data, or Wi-Fi radar data. The state information data is, for example, range, velocity (Doppler), angle, quantity, body shape, action, and physiological signal.

Definition of a Wi-Fi sensing system: A system that is formed by one or more devices that support Wi-Fi communication and can implement the foregoing "Wi-Fi sensing" function.

### CSI data

In wireless communication, CSI is a description of a state of a signal on each propagation path. The CSI describes how a signal is propagated from a transmit end to a receive end through a channel, for example, signal scattering. The CSI represents a combination of a series of impact, for example, environmental attenuation, distance attenuation and the like. In a Wi-Fi standard, to calculate the CSI, the transmit end inserts a predetermined element into a training sequence of a sent radio frame, and the receive end divides a received signal based on the predetermined element. CSI data is data that includes the CSI. The CSI data can be obtained only when a device serves as the receive end, and cannot be obtained when the device serves as the transmit end.

As described in the background part, a solution for efficiently obtaining data, for example, the CSI data, Wi-Fi radar data and the like from other Wi-Fi devices needs to be studied. This application provides a communication solution in which data, for example, the CSI data, Wi-Fi radar data, and the like can be efficiently obtained from other Wi-Fi devices. This application designs a Wi-Fi frame format. The Wi-Fi sensing data, the CSI data, or the Wi-Fi radar data can be efficiently fed back between Wi-Fi devices by using the Wi-Fi frame format, and occupied communication resources are reduced during data feedback. The following first describes a communication system used in the technical solutions of this application.

The technical solutions of this application are mainly applicable to a wireless communication system. The wireless communication system may comply with a third-generation partnership project (third-generation partnership project, 3GPP) wireless communication standard, or may comply with another wireless communication standard, for example, 802 series (for example, 802.11, 802.15, or 802.20) wireless communication standards of institute of electrical and electronics engineers (institute of electrical and electronics engineers, IEEE). The technical solutions of this application may be further applicable to a wireless local area network system, for example, an internet of things (internet of things, IoT) network, an ultra-wide band (ultra-wide band, UWB) system, a vehicle to X (vehicle to X, V2X) network and the like. Certainly, embodiments of this application are applicable to other possible communication systems, such as a long term evolution (long term evolution, LTE) system, an LTE frequency division duplex (frequency division duplex, FDD) system, an LTE time division duplex (time division duplex, TDD) system, a universal mobile telecommunications system (universal mobile telecommunications system, UMTS), a worldwide interoperability for microwave access (worldwide interoperability for microwave access, WiMAX) communication system, a 5th generation (5th generation, 5G) communication system, and a future 6th generation (6th generation, 6G) communication system.

Embodiments of this application are mainly described by using an example of a network on which a WLAN system or a UWB system is deployed, and in particular, a network that uses IEEE 802.11 standard. A person skilled in the art easily understands that each aspect of this application may be extended to other networks that use various standards or protocols, for example, BLUETOOTH (Bluetooth), high-performance wireless LAN (high performance radio LAN, HIPERLAN) (a wireless standard similar to the IEEE 802.11 standard, mainly used in Europe) and a wide area network (WAN), a personal area network (personal area network, PAN), or another network that is known or to be developed in the future. Therefore, the various aspects provided in this application are applicable to any suitable wireless network regardless of coverage and wireless access protocols.

The foregoing communication systems used in this application are merely examples for description, and are not limited thereto. Unified descriptions are provided herein and details are not described below again.

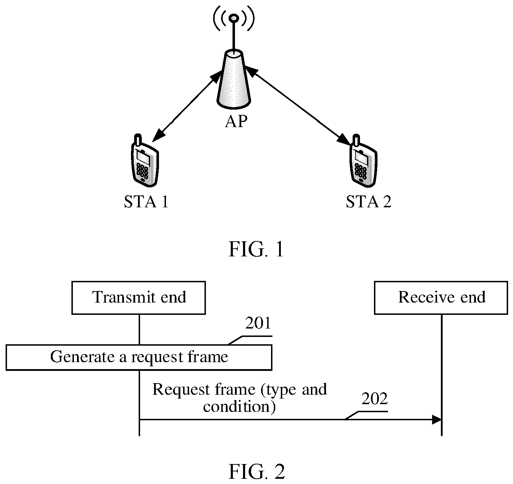

FIG. 1 is an example of a wireless communication system to which a technical solution provided in this application is applicable. The communication system includes an access point (access point, AP) and one or more STAs (only a STA 1 and a STA 2 are shown). Both the access point and the STA support a WLAN protocol. The WLAN protocol may include IEEE 802.11be (or referred to as Wi-Fi 7 and the EHT protocol), and may further include protocols, such as IEEE 802.15ab, IEEE802.11ax, and IEEE 802.11ac. Certainly, with the continuous evolution and development of communication technologies, the WLAN protocol may further include a next generation protocol of IEEE802.11be, and the like. A WLAN is used as an example. An apparatus for implementing the methods in this application may be an access point or a STA in the WLAN, or a chip or a processing system installed in the access point or the STA. In this application, the Wi-Fi device is a device that supports Wi-Fi communication, and the Wi-Fi device may be the AP or a STA. Communication between two Wi-Fi devices may be communication between two APs (supporting Wi-Fi communication), communication between two STAs (supporting the Wi-Fi communication), or communication between an AP (supporting the Wi-Fi communication) and a STA (supporting the Wi-Fi communication).

The access point is an apparatus that has a wireless communication function, supports communication by using a WLAN protocol, and has a function of communicating with another device (for example, a station or another access point) in a WLAN network. Certainly, the access point may further have a function of communicating with another device. A WLAN system includes one or more access point (access point, AP) stations and one or more none access point stations (none access point stations, non-AP STAs). For ease of description, in this specification, an access point station is referred to as an access point (AP), and a none access point station is referred to as a station (STA).

The access point may be an entire device, or may be chips, processing systems, or the like installed in the entire device. A device in which these chips or processing systems are installed may implement the methods and functions in embodiments of this application under control of the chips or processing systems (that is, APs). An AP in embodiments of this application is an apparatus that provides a service for a station (station, STA), and may support 802.11 series protocols, such as 802.15ab, 802.11ac, 802.11n, 802.11g, 802.11b, 802.11a, 802.11be, Wi-Fi 8, or a next generation thereof. For example, the AP may be a communication entity, for example, a communication server, a router, a switch, a bridge, or the like. The AP may include a macro base station, a micro base station (also referred to as a small cell), a picocell base station, a femto base station, a relay station, an access point, a gNB, a transmission reception point (transmission reception point, TRP), an evolved nodeB (evolved NodeB, eNB), a radio network controller (radio network controller, RNC), a home base station (for example, a home evolved NodeB or a home NodeB, HNB), a baseband unit (baseband unit, BBU), a Wi-Fi access point (access point, AP), an integrated access and backhaul (integrated access and backhaul, IAB), and the like. Certainly, the AP may alternatively be chips and processing systems in these devices of various forms, to implement the method and the function in embodiments of this application.

The station is an apparatus that has a wireless communication function, supports communication by using a WLAN protocol, and has a capability of communicating with another station or an access point in a WLAN network. For example, the STA is any communication apparatus that allows a user to communicate with an AP and further communicate with a WLAN. The communication apparatus may be an entire device, or may alternatively be a chip or a processing system installed in the entire device. A device in which these chips or processing systems are installed may implement the methods and functions in embodiments of this application under control of the chips or processing systems (that is, stations). The STA may include a mobile phone (mobile phone), a mobile station (mobile station, MS), a tablet (pad), a computer with a wireless transceiver function (for example, a notebook computer), a virtual reality (virtual reality, VR) device, an augmented reality (augmented reality, AR) device, a wireless terminal in industrial control (industrial control), a wireless terminal in self driving (self driving), a wireless terminal in remote medical (remote medical), a wireless terminal in smart grid (smart grid), a wireless terminal in transportation safety (transportation safety), a wireless terminal in smart city (smart city), a wireless terminal in smart home (smart home), a subscriber unit (subscriber unit), a cellular phone (cellular phone), a wireless data card, a personal digital assistant (personal digital assistant, PDA) computer, a tablet computer, a laptop computer (laptop computer), a machine type communication (machine type communication, MTC) terminal, and the like. The station may include various handsets, vehicle-mounted devices, wearable devices, computing devices that have a wireless communication function, or other processing devices connected to a wireless modem. Optionally, the station may be a handset (handset) with a wireless communication function, a vehicle-mounted device, a wearable device, a terminal in internet of things or a terminal in internet of vehicles, a terminal in any form in 5G and a communication system evolved after 5G, or the like. This is not limited in this application. The station may support 802.11 series protocols, for example, a plurality of WLAN standards such as 802.15ab, 802.11ac, 802.11n, 802.11g, 802.11b, 802.11a, 802.11be, Wi-Fi 8, or a next generation thereof.

With reference to the accompanying drawings, the following provides a Wi-Fi sensing-supported communication method provided in this application.

FIG. 2 is an interaction flowchart of a Wi-Fi sensing-supported communication method according to an embodiment of this application. As shown in FIG. 2, the method includes the following steps.

201. A transmit end generates a request frame.

The request frame includes a first field and a second field, and the first field indicates a first type. The first type is a type of data requested by the transmit end from a receive end. The second field includes a condition that needs to be met by data of the first type. In other words, the second field indicates a condition that needs to be met by data that is of the first type and that is fed back by the receive end to the transmit end. It may be understood that the request frame includes a type and a condition, to be specific, the first type and the condition that needs to be met by the data of the first type fed back by the receive end to the transmit end. The receive end may filter, based on the condition, the data that is of the first type and that needs to be fed back to the transmit end. The data of the first type is any one of the following: channel state information data, Wi-Fi radar data, and state information data that is of a target and that is obtained by processing a Wi-Fi signal, the channel state information data, or the Wi-Fi radar data. In this application, the target may be an object (for example, an electrical household appliance), a person, or another object. This is not limited in this application. Alternatively, the data of the first type may be another type of data that helps implement Wi-Fi sensing. This is not limited in this embodiment of this application. The channel state information data may include channel state information (channel state information, CSI) or other data that can reflect a channel state.

In a possible implementation, the request frame is used to request CSI data obtained through measurement based on the request frame or range-velocity data obtained after the CSI data is measured based on the request frame, and the data of the first type is the CSI data or range-velocity data obtained after the CSI data is processed. In this implementation, the request frame can not only request the receive end to feed back data required by the transmit end, but also limit data content, so that communication resources are saved.

In a possible implementation, the second field includes time information, and the time information indicates the receive end to feed back data obtained in a first time period. The first time period may be a time period before a moment at which the transmit end sends the request frame, or may be a time period after a moment at which the transmit end sends the request frame. This is not limited in this embodiment of this application. The receive end may store data that is obtained by the receive end and that is used to implement Wi-Fi sensing. The data is, for example, channel state information data, Wi-Fi radar data, and state information data that is of a target and that is obtained by processing a Wi-Fi signal, the channel state information data, or the Wi-Fi radar data. In this way, the receive end can feed back, to the transmit end, data that is stored by the receive end and that is used to implement Wi-Fi sensing. An example of the time information included in the second field is as follows: 10 bits (bit) in the second field, namely, bit 0 to bit 9, represent the time information. When the 1^{st} bit is 0, it represents historical data (namely, data obtained by the receive end before the receive end receives the request frame). When the bit is 1, it represents future data (namely, data obtained by the receive end after the receive end receives the request frame). When the 2^{nd} bit is 0, it represents constraint in seconds. When the 2^{nd} bit is 1, it represents constraint in frames. The 3^{rd} bit to the 10^{th} bit represent a number of seconds/frames (0 to 255). For example, the 10 bits in the second field are 0000001010, and the second field indicates the transmit end to request the receive end to feed back Wi-Fi sensing data of historical 10 seconds. For another example, the 10 bits in the second field are 1100000101, and the second field indicates the transmit end to request the receive end to feed back Wi-Fi sensing data of next five frames. It should be understood that the foregoing is merely an example, and the time information may be alternatively indicated in another manner. This is not limited in this embodiment of this application. In this implementation, the second field includes the time information, so that the receive end feeds back the data obtained in the first time period. The transmit end may enable, based on the time information included in the second field, the receive end to feed back data required by the transmit end in any time period.

In a possible implementation, the second field includes a range threshold and/or a velocity threshold. The range threshold indicates the receive end to feed back data that meets the range threshold, and the velocity threshold indicates the receive end to feed back data that meets the velocity threshold. An example in which the second field includes the range threshold is as follows. 15 bits in the second field indicate an upper limit of the range threshold and a lower limit of the range threshold. When the 1^{st} bit is 0, it represents that the range threshold is not enabled. When the 1^{st} bit is 1, it represents that the range threshold is enabled. The 2^{nd} bit to the 8^{th} bit represent a lower limit of the range threshold (0 to 127 meters), and the 9^{th} bit to the 15^{th} bit represent an upper limit of the range threshold (0 to 127 meters). It may be understood that more or fewer bits in the second field may represent the lower limit of the range threshold and/or the upper limit of the range threshold. This is not limited in this embodiment of this application. The second field indicates a range threshold, for example, 10 meters. For example, in a geo-fencing/intrusion awareness application scenario, the upper limit of the range threshold (for example, 10 meters) in the second field indicates the receive end to feed back Wi-Fi sensing data of a specific distance range (for example, < 10 meters) and discard Wi-Fi sensing data of another distance range. An example in which the second field includes the velocity threshold is as follows: 17 bits in the second field represent an upper limit of a velocity and a lower limit of the velocity. When the 1^{st} bit is 0, it represents that the velocity threshold is not enabled. When the 1^{st} bit is 1, it represents that the velocity threshold is enabled. The 2^{nd} bit to the 9^{th} bit represent the lower limit of the velocity (-12.7 m/s to 12.8 m/s), the 10^{th} bit to the 17^{th} bit represent the upper limit of the velocity (-12.7 m/s to 12.8 m/s), the 2^{nd} bit to the 9^{th} bit represent a unit of a value is 0.1 m/s, and the 10^{th} bit to the 17^{th} bit represent a unit of a value is 0.1 m/s. It may be understood that more or fewer bits in the second field may indicate the lower limit of the velocity and/or the upper limit of the velocity. This is not limited in this embodiment of this application. In an application scenario of sensing a dynamic target, the second field indicates (or limit) the receive end not to feed back Wi-Fi sensing data whose velocity is 0 (corresponding to a static target). Another example in which the second field includes the velocity threshold is as follows: In an application scenario of sensing a human body target, the second field indicates the receive end to feed back only Wi-Fi sensing data within a Doppler frequency corresponding to a human body extreme velocity. In this implementation, the second field includes the range threshold. By indicating the receive end to feed back the data that meets the range threshold, the data that meets the range threshold can be obtained, and a data amount fed back by the receive end can be reduced. The second field includes the velocity threshold. By indicating the receive end to feed back data that meets the velocity threshold, the data that meets the velocity threshold can be obtained, and a data amount fed back by the receive end can be reduced.

In a possible implementation, the request frame further includes a third field, and the third field includes a time stamp or a number of the request frame. In this implementation, the third field includes the time stamp or the number of the request frame, so that the receive end distinguishes between different request frames based on the time stamp or the number. In addition, the time stamp of the request frame may be further used for related calculation or processing.

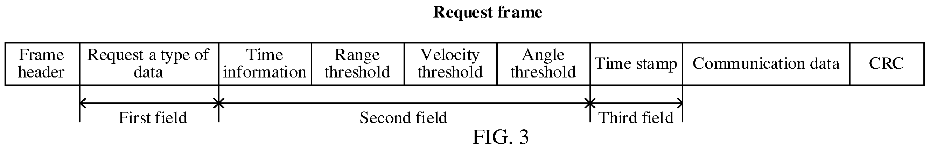

FIG. 3 is an example of a request frame according to an embodiment of this application. As shown in FIG. 3, the request frame includes a frame header, a first field, a second field, a third field, communication data, and cyclic redundancy check (cyclic redundancy check, CRC) information. The first field is used to request a type of data, to be specific, a type of data that needs to be fed back by the receive end. The second field includes time information, a range threshold, a velocity threshold, and an angle threshold, that is, a condition that needs to be met by data of a first type fed back by the receive end to the transmit end. The third field includes a time stamp of the request frame. The communication data represents communication information carried in the request frame. The communication data is optional. The request frame may alternatively be a newly defined frame that does not carry communication information. The request frame may be a frame, defined in the 802.11 standard, with the first field, the second field, and the third field added. The frame header may be any frame header defined in the 802.11 standard. The CRC information is used to check integrity of the request frame.

202. The transmit end sends the request frame to the receive end.

Correspondingly, the receive end receives the request frame from the transmit end. Optionally, the transmit end sends a request frame to the receive end in a unicast manner. The request frame includes an identifier or an address of the receive end. Optionally, the transmit end sends the request frame to the receive end in a multicast or broadcast manner. The request frame is sent to the receive end in the multicast or broadcast manner, so that data fed back by a plurality of receive ends may be obtained, and signaling overheads are low.

In this embodiment of this application, the first field indicates the first type, and the second field indicates the condition that needs to be met by the data of the first type, so that the receive end feeds back, based on the request frame, the data that is of the first type and that meets the condition. Therefore, required data can be efficiently obtained from another Wi-Fi device. It may be understood that, the receive end can feed back, specifically to the transmit end based on the first field and the second field, data required by the transmit end, instead of feeding back data of another type or data that does not meet the condition. In this way, a data amount fed back by the receive end can be reduced, in other words, communication resources occupied by the feedback data can be reduced.

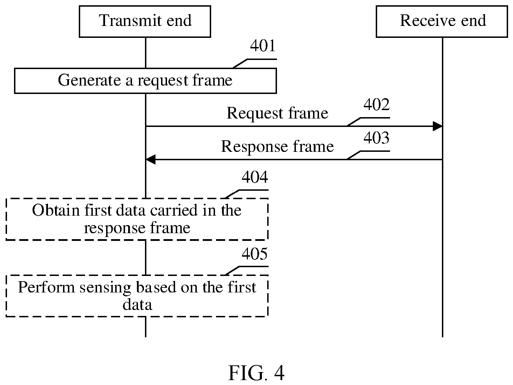

FIG. 4 is an interaction flowchart of another Wi-Fi sensing-supported communication method according to an embodiment of this application. The method interaction procedure in FIG. 4 is a possible implementation of the method described in FIG. 2. In this implementation, a receive end sends a response frame to a transmit end based on a received request frame, so that data required by the transmit end can be fed back to the transmit end at low communication resource overheads. As shown in FIG. 4, the method includes the following steps.

401. The transmit end generates the request frame.

For step 401, refer to step 201.

402. The transmit end sends the request frame to the receive end.

Correspondingly, the receive end receives the request frame from the transmit end. For step 402, refer to step 202.

403. The receive end sends the response frame to the transmit end.

Correspondingly, the transmit end receives the response frame from the receive end. The response frame includes a fourth field, and the fourth field includes first data that is of a first type and that meets the condition. The response frame may be considered as a frame fed back by the receive end to the transmit end for the received request frame.

In a possible implementation, the response frame further includes a fifth field and/or a sixth field, the fifth field includes a decoding result obtained by decoding the first field, and the sixth field includes a decoding result obtained by decoding the second field. The decoding result obtained by decoding the first field may be the first type indicated by the first field, and the decoding result obtained by decoding the second field may be a condition included in the second field. In this implementation, the response frame further includes the fifth field, so that the transmit end checks, based on the fifth field, whether a type of data sent by the receive end is the first type, in other words, checks whether the first field is correctly parsed by the receive end. The response frame further includes the sixth field, so that the transmit end checks, based on the sixth field, whether the type of the data sent by the receive end meets the condition, in other words, checks whether the receive end correctly parses the second field. In this way, this can avoid a case in which the receive end cannot feed back data required by the transmit end to the transmit end because the receive end fails to parse out the correct first field and/or the correct second field.

In a possible implementation, the response frame further includes a seventh field, and the seventh field includes a time stamp or a number of the response frame. In this implementation, the seventh field includes the time stamp or the number of the response frame, so that the transmit end distinguishes between different response frames based on the time stamp or the number. In addition, the time stamp of the response frame may be further used for related calculation or processing. For example, the transmit end sorts Wi-Fi sensing data based on the time stamp of the response frame, and then restores or predicts a target track based on the sorted Wi-Fi sensing data and a time stamp difference between every two corresponding response frames. For another example, the transmit end groups, by using the proximity algorithm based on the time stamp of the response frame, the Wi-Fi sensing data fed back by a plurality of receive ends, and performs data fusion on each group of Wi-Fi sensing data (for example, a Kalman filtering algorithm is used, and a type of the fusion algorithm is not limited), to improve data sensing accuracy.

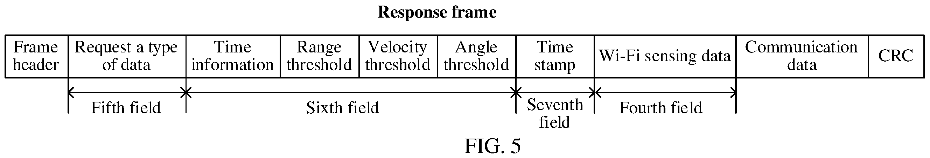

FIG. 5 is an example of a response frame according to an embodiment of this application. As shown in FIG. 5, the response frame includes a frame header, a fifth field, a sixth field, a seventh field, a fourth field, communication data, and CRC information. The fifth field indicates a type of data, to be specific, a type of data fed back by the receive end to the transmit end. The sixth field includes time information, a range threshold, a velocity threshold, and an angle threshold, in other words, a decoding result (condition) obtained by decoding a second field. The seventh field includes a time stamp of the response frame. The fourth field includes Wi-Fi sensing data, that is, data that is of the first type and that is fed back to the transmit end. The communication data, the frame header, and the CRC information are used to check integrity of the response frame.

404. The transmit end obtains first data carried in the response frame.

Step 404 is optional, but not necessary. A possible implementation of step 404 is as follows: The response frame is decoded, and the first data carried in the response frame is obtained.

405. The transmit end performs sensing based on the first data.

Step 405 may be replaced with: The transmit end performs sensing based on the first data and data that is obtained by the transmit end in one or more time periods and that is used to implement Wi-Fi sensing. The following describes a possible implementation of step 405 in detail. Step 405 is optional, but not necessary.

In this embodiment of this application, the receive end sends the response frame to the transmit end based on the received request frame, so that data required by the transmit end can be fed back to the transmit end at low communication resource overheads.

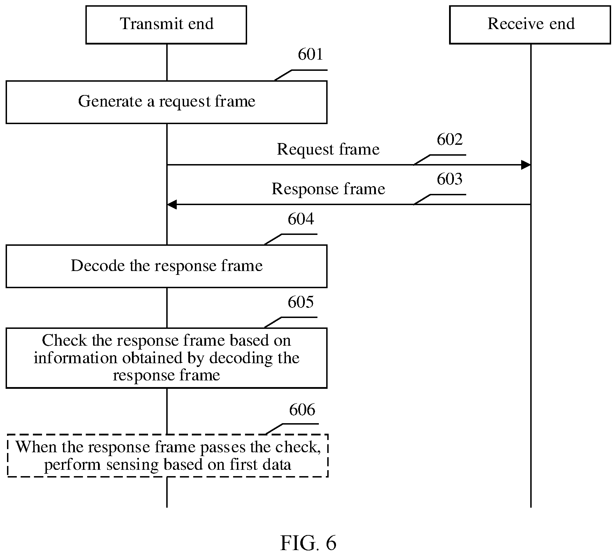

FIG. 6 is an interaction flowchart of another Wi-Fi sensing-supported communication method according to an embodiment of this application. The method interaction procedure in FIG. 6 is a possible implementation of the method described in FIG. 2. In this implementation, the transmit end checks the fifth field, the sixth field, and the time stamp (which may be replaced with a number) of the response frame that are obtained by decoding the response frame, and may check whether data fed back by the receive end is data required by the transmit end. As shown in FIG. 6, the method includes the following steps.

601. The transmit end generates a request frame.

For step 601, refer to step 201.

602. The transmit end sends the request frame to a receive end.

Correspondingly, the receive end receives the request frame from the transmit end. For step 602, refer to step 202.

603. The receive end sends the response frame to the transmit end.

Correspondingly, the transmit end receives the response frame from the receive end. For step 603, refer to step 403.

604. The transmit end decodes the response frame.

That the transmit end decodes the response frame may be: The transmit end decodes the response frame, and obtains information (that is, the first data) obtained through decoding, for example, a fourth field, a fifth field, and a sixth field.

605. The transmit end checks the response frame based on the information obtained by decoding the response frame.

The information obtained by decoding the response frame may be understood as the information obtained by decoding the response frame. Checking the response frame is optional. In other words, the transmit end may not check the response frame. Step 605 may be replaced with: The transmit end checks the information obtained by decoding the response frame. Correspondingly, step 606 may be replaced with: performing sensing based on the first data.

A possible implementation of step 605 is as follows: The response frame includes the fourth field, the fifth field, the sixth field, and a seventh field; and the transmit end checks the fifth field, the sixth field, and the seventh field that are obtained through decoding. Checking the fifth field may be checking whether a type indicated by the fifth field is a first type indicated by a first field. If the type indicated by the fifth field is the first type indicated by the first field, the transmit end determines that the fifth field passes a check. If the type indicated by the fifth field is not the first type indicated by the first field, the transmit end determines that the fifth field fails the check. The checking the fifth field may be considered as checking a type of data fed back by the receive end. Checking the sixth field may be checking whether a condition indicated by the sixth field is the same as a condition indicated by a second field. If the condition indicated by the sixth field is the same as the condition indicated by the second field, the transmit end determines that the sixth field passes the check. If the condition indicated by the sixth field is different from the condition indicated by the second field, the transmit end determines that the sixth field fails the check. The checking the sixth field may be considered as checking whether data of the first type fed back by the receive end satisfies a condition. In this implementation, that the response frame passes the check means that the fifth field, the sixth field, and the seventh field all pass the check. In this implementation, the fifth field, the sixth field, and the time stamp of the response frame that are obtained through decoding are checked, and whether the data fed back by the receive end is data required by the transmit end may be checked.

Another possible implementation of step 605 is as follows: The response frame includes the fourth field and the fifth field; and the transmit end checks the fifth field obtained through decoding. Checking the fifth field may be checking whether a type indicated by the fifth field is the first type indicated by the first field. If the type indicated by the fifth field is the first type indicated by the first field, the transmit end determines that the fifth field passes the check. If the type indicated by the fifth field is not the first type indicated by the first field, the transmit end determines that the fifth field fails the check. The checking the fifth field may be considered as checking the type of data fed back by the receive end. Optionally, the response frame further includes a seventh field, and the seventh field includes a time stamp or a number of the response frame. The transmit end may further check the time stamp or the number that is of the response frame and that is obtained by decoding the response frame. If the response frame does not include the seventh field, that the response frame passes the check means that the fifth field passes the check. If the response frame includes the seventh field, that the response frame passes the check means that both the fifth field and the seventh field pass the check. In this implementation, the fifth field obtained through decoding is checked, and whether the data fed back by the receive end is the data required by the transmit end may be checked.

Another possible implementation of step 605 is as follows: The response frame includes the fourth field and the sixth field; and the transmit end checks the sixth field obtained through decoding. Checking the sixth field may be checking whether a condition indicated by the sixth field is the same as a condition indicated by the second field. If the condition indicated by the sixth field is the same as the condition indicated by the second field, the transmit end determines that the sixth field passes the check. If the condition indicated by the sixth field is different from the condition indicated by the second field, the transmit end determines that the sixth field fails the check. The checking the sixth field may be considered as checking whether data of the first type fed back by the receive end satisfies a condition. Optionally, the response frame further includes a seventh field, and the seventh field includes a time stamp or a number of the response frame. The transmit end may further check the time stamp or the number that is of the response frame and that is obtained by decoding the response frame. If the response frame does not include the seventh field, that the response frame passes the check means that the sixth field passes the check. If the response frame includes the seventh field, that the response frame passes the check means that both the sixth field and the seventh field pass the check. In this implementation, the sixth field obtained through decoding is checked, and whether the data fed back by the receive end is the data required by the transmit end may be checked.

606. When the response frame passes the check, perform sensing based on the first data.

The following describes in detail a specific manner of performing sensing based on the first data. Step 606 is optional. Step 606 may be replaced with: discard the response frame when the response frame fails to pass the check. The discarding the response frame may be deleting or clearing the stored response frame, or may be terminating a parsing or processing operation on the response frame. The discarding the response frame may be replaced with: ignore the response frame, in other words, consider that the response frame is an invalid frame.

In this embodiment of this application, the transmit end checks the response frame based on the information obtained by decoding the response frame. When the response frame passes the check, sensing is performed based on the first data. When the response frame does not pass the check, the response frame is discarded. Whether the data fed back by the receive end is the data required by the transmit end may be checked, and a processing amount is reduced.

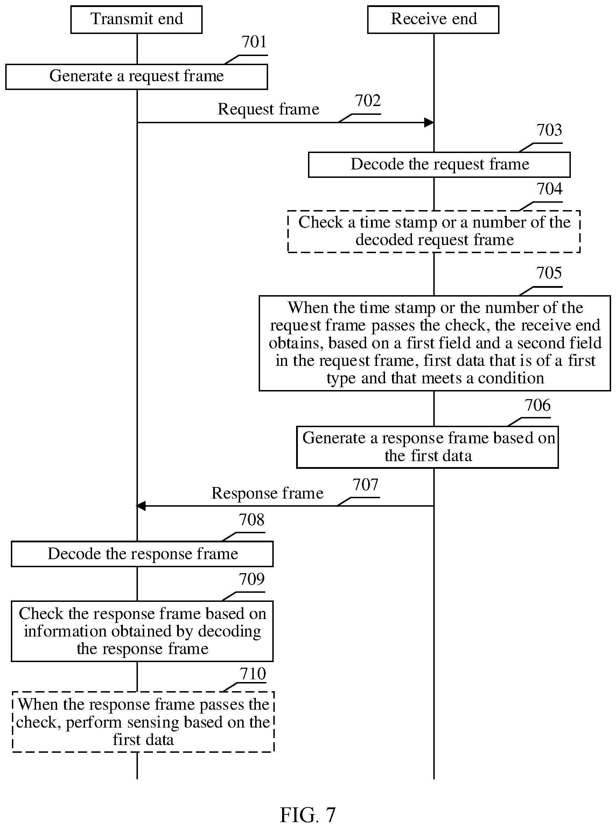

FIG. 7 is an interaction flowchart of another Wi-Fi sensing-supported communication method according to an embodiment of this application. The method interaction procedure in FIG. 7 is a possible implementation of the method described in FIG. 2. In this implementation, when a time stamp or number of a request frame passes a check, a receive end feeds back, to a transmit end based on the request frame, data required by the transmit end, so that occupied communication resources can be reduced. As shown in FIG. 7, the method includes the following steps.

701. The transmit end generates the request frame.

For step 701, refer to step 201.

702. The transmit end sends the request frame to the receive end.

Correspondingly, the receive end receives the request frame from the transmit end. For step 702, refer to step 202.

703. The receive end decodes the request frame.

That the receive end decodes the request frame may be: The transmit end decodes the request frame and obtains information obtained through decoding, for example, a first field, a second field, and a third field, in other words, the time stamp or number of the request frame.

704. The receive end checks the time stamp or number of the decoded request frame.

Step 704 is optional. An example of checking the time stamp or number of the decoded request frame is as follows: A time stamp of a request frame received later by the receive end should not be earlier than a time stamp of a request frame that arrives earlier, or code of a request frame received later by the receive end should not be less than a number of a request frame that arrives earlier.

705. When the time stamp or number of the request frame passes the check, the receive end obtains, based on the first field and the second field in the request frame, first data that is of a first type and that meets a condition.

Because the first field indicates the first type, the receive end may learn of, based on the first field, data that is of the first type and that needs to be fed back to the transmit end. The second field indicates the condition that needs to be met by the data of the first type, namely, a condition that needs to be met by the data fed back by the receive end to the transmit end. Therefore, the receive end may learn of, based on the second field, the condition that needs to be met by the data fed back to the transmit end. The obtaining the first data that is of the first type and that meets a condition may be understood as obtaining the first data that is of the first type and that meets the condition indicated by the second field. The condition indicated by the second field may be understood as a condition for the receive end to filter data that is of the first type and that is to be fed back to the transmit end, and the receive end may filter, based on the condition, the data that is of the first type and that is to be fed back to the transmit end.

In a possible implementation, step 704 and step 705 may be replaced with: The receive end obtains, based on the first field and the second field in the request frame, the first data that is of the first type and that meets the condition.

706. The receive end generates a response frame based on the first data.

A possible implementation of step 706 is as follows: The receive end places the first data in a fourth field in the response frame. Optionally, the receive end places the first type in a fifth field of the response frame. The fifth field indicates the first type. Optionally, the receive end places the condition indicated by the second field in a sixth field of the response frame. The sixth field indicates the condition indicated by the second field. For example, the fifth field in the response frame is the same as the first field in the request frame, and the sixth field in the response frame is the same as the second field in the request frame. Optionally, the receive end places a time stamp or a number of the response frame in a seventh field of the response frame.

707. The receive end sends the response frame to the transmit end.

Correspondingly, the transmit end receives the response frame from the receive end. For step 707, refer to step 403.

708. The transmit end decodes the response frame.

For step 708, refer to step 604.

709. The transmit end checks the response frame based on information obtained by decoding the response frame.

For step 709, refer to step 605.

710. When the response frame passes a check, the transmit end performs sensing based on the first data.

The following describes in detail a specific manner of performing sensing based on the first data. Step 710 is optional. Step 710 may be replaced with: discard the response frame when the response frame fails to pass the check.

Step 705 to step 710 may be replaced with: when the time stamp or number of the request frame fails to pass the check, skip responding to the request frame, in other words, skip performing feedback to the request frame. The skipping responding to the request frame may be discarding the request frame, or may be ignoring the request frame. In other words, it is considered that the request frame is an invalid frame. In a case in which the time stamp or number of the request frame fails to pass the check, the request frame is not responded to, so that data sending can be reduced, to reduce overheads of communication resources.

In this embodiment of this application, when the time stamp or number of the request frame passes the check, the first data that is of the first type and that meets the condition is obtained based on the first field and the second field, to accurately feed back, to the transmit end, data required by the transmit end, and reduce occupied communication resources.

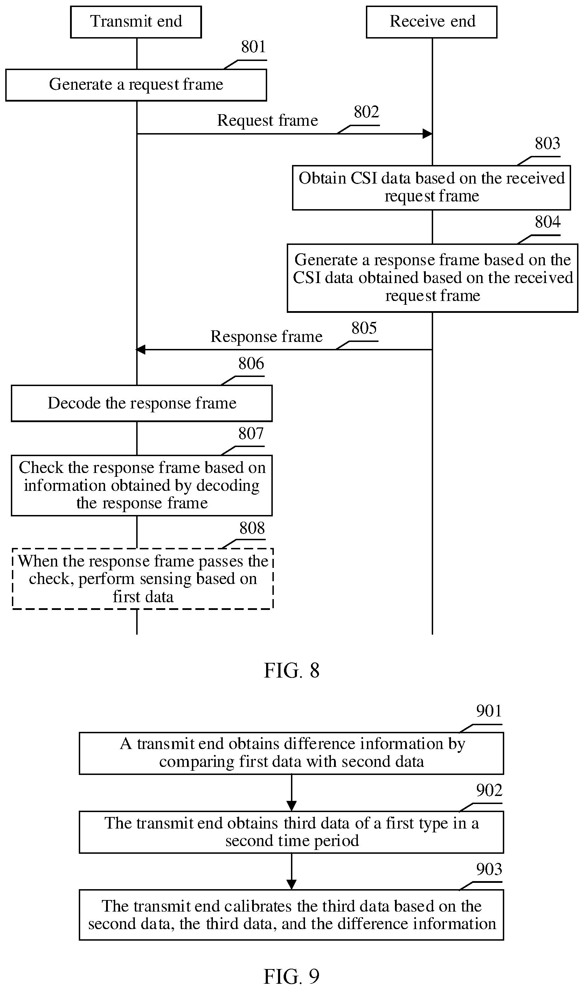

FIG. 8 is an interaction flowchart of another Wi-Fi sensing-supported communication method according to an embodiment of this application. The method interaction procedure in FIG. 8 is a possible implementation of the method described in FIG. 2. In this implementation, a request frame sent by a transmit end requires a receive end to feed back CSI data obtained based on the request frame, so that occupied communication resources can be reduced. As shown in FIG. 8, the method includes the following steps.

801. The transmit end generates the request frame.

For step 801, refer to step 201. Data of the foregoing first type is channel state information data, for example, CSI data. Optionally, the request frame is used to request (or require) the receive end to feed back, to the transmit end, the CSI data obtained based on the request frame, and the data of the first type is the CSI data. The CSI data obtained based on the request frame may be CSI data measured based on the request frame. Optionally, the request frame is used to request range-velocity data that is obtained after processing the CSI data measured based on the request frame, and the data of the first type is range-velocity data that is obtained by processing the CSI data.

802. The transmit end sends the request frame to the receive end.

Correspondingly, the receive end receives the request frame from the transmit end. For step 802, refer to step 202.

803. The receive end obtains the CSI data based on the received request frame.

The CSI data obtained by the receive end based on the received request frame is first data to be fed back to the transmit end, in other words, the first data that the transmit end requests the receive end to feed back. Optionally, before performing step 803, the receive end may decode the request frame, and check information obtained through decoding. After the request frame passes a check, step 803 is performed.

A possible implementation of step 803 is as follows: A training sequence of the request frame includes a predetermined element; and the receive end obtains the CSI based on the predetermined element and the received request frame. Because it is a common technical means in this field to measure the CSI based on received signal, details are not described herein again.

804. The receive end generates a response frame based on the CSI data obtained based on the received request frame.

For step 804, refer to step 706.

805. The receive end sends the response frame to the transmit end.

Correspondingly, the transmit end receives the response frame from the receive end. For step 805, refer to step 403.

806. The transmit end decodes the response frame.

For step 806, refer to step 604.

807. The transmit end checks the response frame based on information obtained by decoding the response frame.

For step 807, refer to step 605.

808. When the response frame passes a check, the transmit end performs sensing based on the first data.

Step 808 is optional.

In this embodiment of this application, the request frame sent by the transmit end requires the receive end to feed back the CSI data obtained based on the request frame, and the receive end feeds back, to the transmit end, the CSI data obtained based on the request frame, so that occupied communication resources can be reduced.

The method procedures in FIG. 2, FIG. 4, and FIG. 6 to FIG. 8 describe a procedure in which the transmit end requests the receive end to feed back data required by the transmit end. With reference to the accompanying drawings, the following describes a process in which the transmit end implements Wi-Fi sensing based on data fed back by the receive end and data obtained by the transmit end.

FIG. 9 is a flowchart of a Wi-Fi sensing method according to an embodiment of this application. After performing an operation performed by a transmit end in any method procedure in FIG. 2, FIG. 4, and FIG. 6 to FIG. 8, the transmit end may obtain data required by the transmit end and fed back by a receive end. After obtaining the data that is required by the transmit end and fed back by the receive end, the transmit end may perform the method in FIG. 9 to implement Wi-Fi sensing. In other words, before performing FIG. 9, the transmit end may perform an operation performed by the transmit end in any method procedure in FIG. 2, FIG. 4, and FIG. 6 to FIG. 8, to obtain required data. It may be understood that FIG. 9 may be an independent procedure, or may be combined with any method procedure in FIG. 2, FIG. 4, and FIG. 6 to FIG. 8. As shown in FIG. 9, the method includes the following steps.

901. The transmit end obtains difference information by comparing first data with second data.

The difference information represents a difference between the first data and the second data. The second data includes data of a second type obtained by the transmit end in a first time period. The first data includes data of a first type fed back by the receive end to the transmit end in the first time period. For example, the data of the first type is CSI data, and the data of the second type is Wi-Fi radar data. For another example, the data of the second type is the CSI data, and the data of the first type is the Wi-Fi radar data.

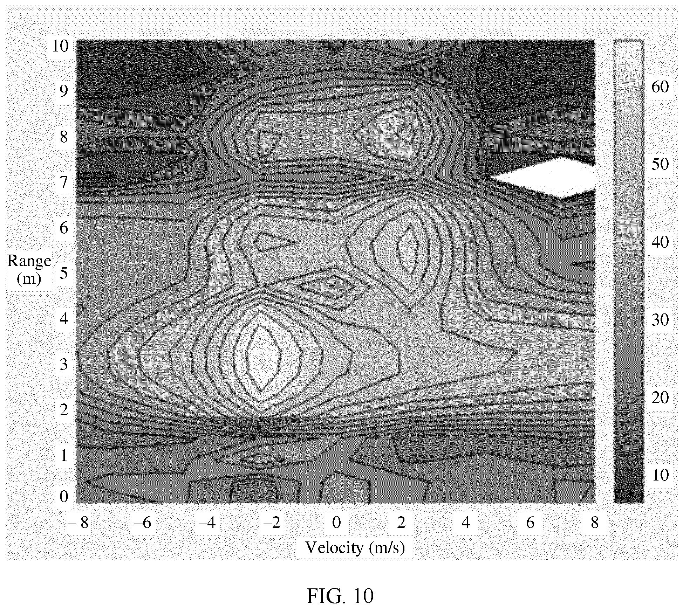

An example of step 901 is as follows: The first data is the CSI data, and the second data is the Wi-Fi radar data; Fourier transform processing is separately performed on the first data and the second data to respectively obtain range-velocity two-dimensional matrices; and the difference information is obtained by comparing two range-velocity two-dimensional matrices (to be specific, a range-velocity two-dimensional matrix obtained by performing Fourier transform processing on the first data and a range-velocity two-dimensional matrix obtained by performing Fourier transform processing on the second data). Because the first data and the second data are obtained at a same time, the difference information includes only a difference caused by different observation angles of the transmit end and the receive end. In a range-velocity two-dimensional matrix, one dimension represents range information, and the other dimension represents velocity information. FIG. 10 is a diagram of a range-velocity two-dimensional matrix according to an embodiment of this application. As shown in FIG. 10, a horizontal axis represents a velocity (velocity), and a vertical axis represents a range (range).

902. The transmit end obtains third data of the first type in a second time period.

The second time period is a time period after the first time period. The third data may include the data, for example, the CSI data, that is of the first type in the second time period and that is fed back by the receive end to the transmit end.

903. The transmit end calibrates the third data based on the second data, the third data, and the difference information.

That the transmit end calibrates the third data, based on the second data, the third data, and the difference information is an example of obtaining sensing information based on the second data, the third data, and the difference information. The sensing information represents a state change of a target from the first time period to the second time period.

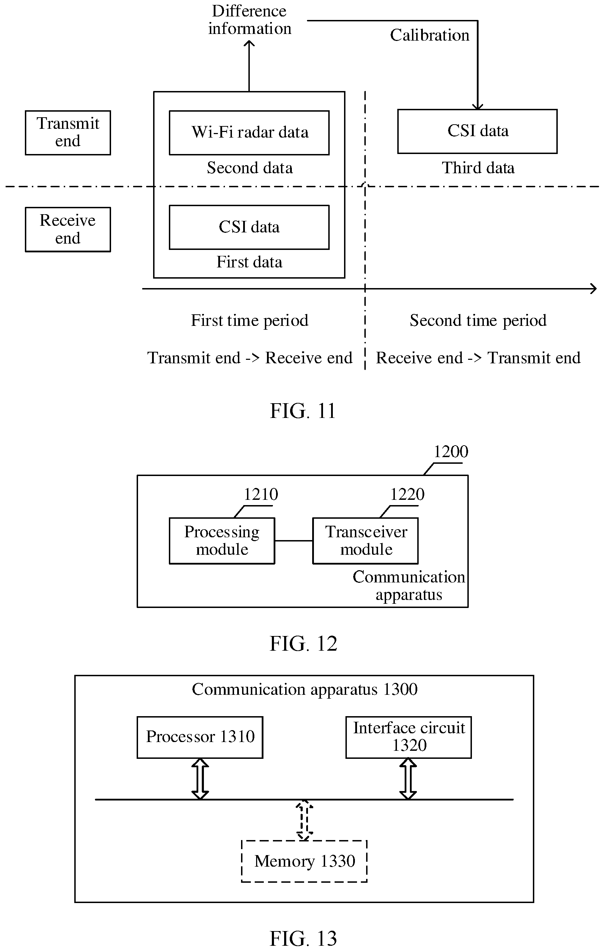

An example of step 903 is as follows: The second data is Wi-Fi radar data, and the third data is CSI data; and Fourier transform processing is separately performed on the second data and the third data to separately obtain range-velocity two-dimensional matrices. Because the second data and the third data are obtained at different time, the difference between the two range-velocity two-dimensional matrices obtained by separately performing Fourier transform processing on the second data and the third data includes not only a difference caused by different observation angles of the transmit end and the receive end, but also a state change difference of a target at different time. The difference caused by different observation angles of the transmit end and the receive end is obtained in step 901, that is, the foregoing difference information. Therefore, differences between the range-velocity two-dimensional matrix obtained based on the third data and the difference information are compared, so that a difference caused by a different viewing angle between the transmit end and the receive end can be eliminated, that is, the third data is calibrated. The two calibrated range-velocity two-dimensional matrices (to be specific, the range-velocity two-dimensional matrix obtained by comparing differences between the range-velocity two-dimensional matrix obtained based on the third data and the difference information and the range-velocity two-dimensional matrix obtained based on the second data) include only state changes of the target at different time, and have time coherence, so that the foregoing observation discontinuity problem can be resolved. FIG. 11 is a schematic flowchart of a Wi-Fi sensing method according to an embodiment of this application. FIG. 11 shows an example of a method procedure in FIG. 9. As shown in FIG. 11, first data is CSI data obtained by a receive end in a first time period. Second data is Wi-Fi radar data obtained by a transmit end in a first time period. Third data is CSI data obtained by the transmit end in a second time period. The transmit end compares the second data with the first data fed back by the receive end, to obtain difference information. The third data is calibrated based on the difference information.

In this embodiment of this application, the third data is checked based on the second data, the third data, and the difference information. Sensing data coherent from the first time period to the second time period can be obtained.

The foregoing describes the communication method provided in embodiments of this application. The following describes, with reference to the accompanying drawings, a structure of a communication apparatus that can implement the communication method provided in embodiments of this application.

FIG. 12 is a diagram of a structure of a communication apparatus 1200 according to an embodiment of this application. The communication apparatus 1200 may implement functions or steps implemented by the transmit end in each foregoing method embodiments, or may implement functions or steps implemented by the receive end in the foregoing method embodiments. The communication apparatus may include a processing module 1210 and a transceiver module 1220. Optionally, the communication apparatus may further include a storage unit. The storage unit may be configured to store instructions (code or a program) and/or data. The processing module 1210 and the transceiver module 1220 may be coupled to the storage unit. For example, the processing module 1210 may read instructions (code or programs) and/or data in the storage unit, to implement a corresponding method. The foregoing units may be independently disposed, or may be partially or completely integrated. For example, the transceiver module 1220 may include a sending module and a receiving module. The sending module may be a transmitter, and the receiving module may be a receiver. An entity corresponding to the transceiver module 1220 may be a transceiver, or may be a communication interface.

In some possible implementations, the communication apparatus 1200 can correspondingly implement behaviors and functions of the transmit end in the foregoing method embodiments. For example, the communication apparatus 1200 may be a transmit end, or may be a component (for example, a chip or a circuit) used in the transmit end. For example, the transceiver module 1220 may be configured to perform all receiving or sending operations performed by the transmit end in embodiments in FIG. 2, FIG. 4, and FIG. 6 to FIG. 9. The processing module 1210 is configured to perform all operations except a receiving and sending operation performed by the transmit end in embodiments in FIG. 2, FIG. 4, and FIG. 6 to FIG. 9.

In some possible implementations, the communication apparatus 1200 can correspondingly implement behaviors and functions of the receive end in the foregoing method embodiments. For example, the communication apparatus 1200 may be a receive end, or may be a component (for example, a chip or a circuit) used in the receive end. For example, the transceiver module 1220 may be configured to perform all receiving or sending operations performed by the receive end in embodiments in FIG. 2, FIG. 4, and FIG. 6 to FIG. 9. The processing module 1210 is configured to perform all operations except a receiving and sending operation performed by the receive end in embodiments in FIG. 2, FIG. 4, and FIG. 6 to FIG. 9.

It may be understood that, to implement the functions in the foregoing embodiments, the transmit end and the receive end include corresponding hardware structures and/or software modules for performing each function. A person skilled in the art should be easily aware that, in combination with the units and the method steps in the examples described in embodiments disclosed in this application, this application can be implemented by using hardware or a combination of hardware and computer software. Whether a function is performed by using hardware or hardware driven by computer software depends on particular application scenarios and design constraint conditions of the technical solutions.

FIG. 13 is a diagram of a structure of another communication apparatus 1300 according to an embodiment of this application. The communication apparatus 1300 may be configured to implement functions of the transmit end or the receive end in the foregoing method embodiments, and therefore can also implement beneficial effects of the foregoing method embodiments. As shown in FIG. 13, a communication apparatus 1300 includes a processor 1310 and an interface circuit 1320. The processor 1310 and the interface circuit 1320 are coupled to each other. It may be understood that the interface circuit 1320 may be a transceiver or an input/output interface. Optionally, the communication apparatus 1300 may further include a memory 1330, configured to store instructions executed by the processor 1310, input data required for running instructions by the processor 1310, or data generated after the processor 1310 runs instructions. The processor 1310 may be configured to implement a function of the processing module 1210, and the interface circuit 1320 is configured to implement a function of the transceiver module 1220.

In some embodiments of this application, the processor 1310 and the interface circuit 1320 may be configured to perform a function, an operation, or the like performed by the transmit end. For example, the interface circuit 1320 performs all receiving or sending operations performed by the transmit end in embodiments in FIG. 2, FIG. 4, and FIG. 6 to FIG. 9. For example, the processor 1310 is configured to perform all operations except a receiving and sending operation performed by the transmit end in embodiments in FIG. 2, FIG. 4, and FIG. 6 to FIG. 9.

In some embodiments of this application, the processor 1310 and the interface circuit 1320 may be configured to perform a function, an operation, or the like performed by the receive end. For example, the interface circuit 1320 performs all receiving or sending operations performed by the receive end in embodiments in FIG. 2, and FIG. 4 to FIG. 9. For example, the processor 1310 is configured to perform all operations except the receiving and sending operation performed by the receive end in embodiments in FIG. 2, and FIG. 4 to FIG. 9.

When the communication apparatus is a chip used in the transmit end, the chip of the transmit end implements a function of the transmit end in the foregoing method embodiments. The chip of the transmit end receives information from another module (for example, a radio frequency module or an antenna) in the transmit end. The information is sent by the receive end to the transmit end. Alternatively, the chip of the transmit end sends information to another module (for example, a radio frequency module or an antenna) in the transmit end. The information is sent by the transmit end to the receive end.

When the communication apparatus is a chip used in the receive end, the chip of the receive end implements a function of the receive end in the foregoing method embodiments. The chip of the receive end receives information from another module (for example, a radio frequency module or an antenna) in the receive end. The information is sent by the transmit end to the receive end. Alternatively, the chip of the receive end sends information to another module (for example, a radio frequency module or an antenna) in the receive end. The information is sent by the receive end to the transmit end.

It may be understood that, the processor in this embodiment of this application may be a central processing unit (Central Processing Unit, CPU), or may be another general-purpose processor, a digital signal processor (Digital Signal Processor, DSP), an application-specific integrated circuit (Application Specific Integrated Circuit, ASIC), a field programmable gate array (Field Programmable Gate Array, FPGA) or another programmable logic device, a transistor logic device, a hardware component, or any combination thereof. The general purpose processor may be a microprocessor or any regular processor or the like.

The method steps embodiments of this application may be implemented in hardware, or may be implemented in software instructions that may be executed by a processor. The software instructions may include a corresponding software module. The software module may be stored in a random access memory, a flash memory, a read-only memory, a programmable read-only memory, an erasable programmable read-only memory, an electrically erasable programmable read-only memory, a register, a hard disk, a removable hard disk, a CD-ROM, or any other form of storage medium well-known in the art. For example, a storage medium is coupled to a processor, so that the processor can read information from the storage medium and write information into the storage medium. The storage medium may alternatively be a component of the processor. The processor and the storage medium may be disposed in an ASIC. In addition, the ASIC may be located at a receive end or a transmit end. The processor and the storage medium may also exist in the receive end or the transmit end as discrete components.

It should be noted that in this embodiment of this application, a communication apparatus for sending a request frame is referred to as a transmit end, and a communication apparatus for sending a response frame is referred to as a receive end. It should be understood that, for a communication apparatus, the communication apparatus may be used as a transmit end, or may be used as a receive end. In other words, one terminal device may perform an operation performed by the transmit end, or may also perform an operation performed by the receive end.

All or some of the foregoing embodiments may be implemented by using software, hardware, firmware, or any combination thereof. When software is used to implement embodiments, all or a part of embodiments may be implemented in a form of a computer program product. The computer program product includes one or more computer programs or instructions. When the computer programs or instructions are loaded and executed on a computer, all or some of the procedures or functions in embodiments of this application are executed. The computer may be a general-purpose computer, a dedicated computer, a computer network, a network device, user equipment, or another programmable apparatus. The computer programs or instructions may be stored in a computer-readable storage medium, or may be transmitted from a computer-readable storage medium to another computer-readable storage medium. For example, the computer programs or instructions may be transmitted from one website, computer, server, or data center to another website, computer, server, or data center in a wired manner or in a wireless manner. The computer-readable storage medium may be any usable medium that can be accessed by the computer, or a data storage device, for example, a server or a data center, integrating one or more usable media. The usable medium may be a magnetic medium, for example, a floppy disk, a hard disk, or a magnetic tape; or may be an optical medium, for example, a digital video disc; or may be a semiconductor medium, for example, a solid state disk. The computer-readable storage medium may be a volatile or non-volatile storage medium, or may include two types of storage media: a volatile storage medium and a non-volatile storage medium.

In various embodiments of this application, unless otherwise stated or there is a logic conflict, terms and/or descriptions in different embodiments are consistent and may be mutually referenced, and technical features in different embodiments may be combined based on an internal logical relationship thereof, to form a new embodiment.

## Claims

1. A Wi-Fi sensing-supported communication method, performed by a transmit end or a module used in the transmit end, and comprising:
generating a request frame; and
sending the request frame to a receive end, wherein the request frame comprises a first field and a second field, the first field indicates a first type, the first type is a type of data requested by the transmit end from the receive end, the second field comprises a condition that needs to be met by data of the first type, and the data of the first type is any one of the following: channel state information data, Wi-Fi radar data, and state information data that is of a target and that is obtained by processing a Wi-Fi signal, the channel state information data, or the Wi-Fi radar data.

2. The method according to claim 1, wherein the second field comprises time information, and the time information indicates the receive end to feed back data obtained in a first time period.

3. The method according to claim 1 or 2, wherein the second field comprises a range threshold and/or a velocity threshold, the range threshold indicates the receive end to feed back data that meets the range threshold, and the velocity threshold indicates the receive end to feed back data that meets the velocity threshold.

4. The method according to any one of claims 1 to 3, wherein the request frame further comprises a third field, and the third field comprises a time stamp or a number of the request frame.

5. The method according to any one of claims 1 to 4, wherein the method further comprises:
receiving a response frame sent by the receive end for the request frame, wherein the response frame comprises a fourth field, and the fourth field comprises first data that meets the condition and that is of the first type.

6. The method according to claim 5, wherein the response frame further comprises a fifth field and/or a sixth field, the fifth field comprises a decoding result obtained by decoding the first field, and the sixth field comprises a decoding result obtained by decoding the second field.

7. The method according to claim 5 or 6, wherein the response frame further comprises a seventh field, and the seventh field comprises a time stamp or a number of the response frame.

8. The method according to any one of claims 5 to 7, wherein the condition comprises feeding back data in the first time period, and the first data is data of the first type obtained by the receive end in the first time period; and after the receiving a response frame sent by the receive end for the request frame, the method further comprises:
obtaining difference information by comparing the first data with second data, wherein the difference information represents a difference between the first data and the second data, the second data comprises data of a second type obtained by the transmit end in the first time period, and the data of the first type is the channel state information data and the data of the second type is the Wi-Fi radar data, or the data of the second type is the channel state information data and the data of the first type is the Wi-Fi radar data;
obtaining third data of the first type in a second time period, wherein the second time period is a time period after the first time period; and
obtaining sensing information based on the second data, the third data, and the difference information, wherein the sensing information represents a state change of the target from the first time period to the second time period.

9. A Wi-Fi sensing-supported communication method, performed by a receive end or a module used in the receive end, and comprising:
receiving a request frame from a transmit end, wherein the request frame comprises a first field and a second field, the first field indicates a first type, the first type is a type of data requested by the transmit end from the receive end, the second field comprises a condition that needs to be met by data of the first type, and the data of the first type is any one of the following: channel state information data, Wi-Fi radar data, and state information data that is of a target and that is obtained by processing a Wi-Fi signal, the channel state information data, or the Wi-Fi radar data; and
sending a response frame to the transmit end, wherein the response frame comprises a fourth field, and the fourth field comprises first data that is of the first type and that meets the condition.

10. The method according to claim 9, wherein the response frame further comprises a fifth field and/or a sixth field, the fifth field comprises a decoding result obtained by decoding the first field, and the sixth field comprises a decoding result obtained by decoding the second field.

11. The method according to claim 9 or 10, wherein the response frame further comprises a seventh field, and the seventh field comprises a time stamp or a number of the response frame.

12. The method according to any one of claims 9 to 11, wherein the second field comprises time information, and the time information indicates the receive end to feed back data obtained in a first time period.

13. The method according to any one of claims 9 to 12, wherein the second field comprises a range threshold and/or a velocity threshold, the range threshold indicates the receive end to feed back data that meets the range threshold, and the velocity threshold indicates the receive end to feed back data that meets the velocity threshold.

14. The method according to any one of claims 9 to 13, wherein the request frame further comprises a third field, and the third field comprises a time stamp or a number of the request frame.

15. A communication apparatus, comprising a module or unit configured to implement the method according to any one of claims 1 to 8.

16. A communication apparatus, comprising a module or unit configured to implement the method according to any one of claims 9 to 14.

17. A computer-readable storage medium, wherein the computer-readable storage medium stores a computer program, the computer program comprises program instructions, and when the program instructions are executed, a computer is enabled to perform the method according to any one of claims 1 to 14.

18. A communication apparatus, comprising a processor and an interface circuit, wherein the interface circuit is configured to receive a signal from another communication apparatus and transmit the signal to the processor, or send a signal from the processor to another communication apparatus, and the processor is configured to implement the method according to any one of claims 1 to 14 through a logic circuit or executing code instructions.

19. A chip, comprising:
a communication interface, configured to receive and send a signal of the chip; and
a processor, configured to execute computer program instructions, to enable a communication apparatus that comprises the chip to perform the method according to any one of claims 1 to 14.

20. A communication system, comprising the communication apparatus according to claim 15 and the communication apparatus according to claim 16.
